# EUROPÄISCHE PATENTSCHRIFT

(11) **EP 2 350 475 B1**
(45) Veröffentlichungstag und Bekanntmachung des Hinweises auf die Patenterteilung: **07.05.2014**
(21) Anmeldenummer: 09753023.2
(22) Anmeldetag: 28.10.2009
(51) Int. Cl.: F16B 39/24, F16B 43/00

(54) **SICHERUNGSELEMENT FÜR SCHRAUBVERBINDUNGEN UND DESSEN VERWENDUNG**
FASTENING ELEMENT FOR SCREW CONNECTIONS AND USE THEREOF
ÉLÉMENT D'ARRÊT POUR ASSEMBLAGES VISSÉS ET UTILISATION DE CELUI-CI

(30) Priorität: 07.11.2008 DE 102008056368
(43) Veröffentlichungstag der Anmeldung: 03.08.2011
(73) Patentinhaber: ESK Ceramics GmbH & Co.KG, 87437 Kempten (DE)
(72) Erfinder: BURTSCHE, Daniel, 87437 Kempten (DE); MEYER, Jürgen, 87437 Kempten (DE); SCHREINER, Sven, 81667 München (DE); FRIEDRICH, Hubert, 88048 Friedrichshafen (DE)
(74) Vertreter: Ter Meer Steinmeister & Partner
(86) Internationale Anmeldenummer: PCT/EP2009/007725
(87) Internationale Veröffentlichungsnummer: WO 2010/051932

(56) Entgegenhaltungen:
- EP-A1- 0 961 038
- EP-A1- 1 300 485
- DE-A1- 4 038 557

## Beschreibung

### Gebiet der Erfindung

Die Erfindung betrifft eine mechanische Schraubensicherung in Form eines Sicherungselements für Schraubverbindungen als Zwischenlage zwischen Schraubenkopf und Auflagewerkstoff und/oder zwischen Mutter und Auflagewerkstoff sowie die Verwendung eines solchen Sicherungselements für hochbelastete, dauerhafte und wieder lösbare Schraubverbindungen.

### Hintergrund der Erfindung

Schraubverbindungen werden in allen Bereichen des Maschinen-, Anlagen-und Kraftfahrzeugbaus eingesetzt, um kraftschlüssige Verbindungen zu erzielen. Insbesondere bei dynamischer Belastung der Schraubverbindungen gewährleisten viele der herkömmlichen Schraubverbindungen keine ausreichende Sicherheit gegen ein selbsttätiges Lösen der Schraubverbindungen. Man ist daher bestrebt. Maßnahmen zur Sicherung von Schraubverbindungen vorzusehen, um bei hohen und insbesondere dynamischen Belastungen ein selbsttätiges Lösen der Schraubverbindungen zu verhindern.

### Stand der Technik

Es gibt verschiedene mechanische Schraubensicherungen, die im Handel erhältlich sind. Beispiele für solche Schraubensicherungen sind die Rippschraube, die Sperrzahnschraube, das NordLock-Scheibenpaar, die Teckentrup-Scheibe und die Schnorr-Scheibe.

Die beispielsweise in der DE 25 56 985 A1 beschriebene Rippschraube (oder auch die Rippmutter) hat auf der Unterseite des Schraubenkopfs eine Profilierung. Durch die elastischen Rippen stellt sich im gering plastischen Bereich der Auflagen die Sicherungswirkung ein (Rolliereffekt). Hierbei wird keine separate Sicherungsscheibe verwendet.

Bei der NordLock-Schraubensicherung (Losdrehsicherung) wird ein Keilsicherungsscheibenpaar eingesetzt. Die Scheiben haben auf der Außenseite Radialrippen und auf der Innenseite Keilflächen, deren Steigung stets größer als die Gewindesteigung ist. Die paarweise verklebten Scheiben werden unter den Schraubenkopf und/oder die Mutter gelegt. Aufgrund der Radialrippen kommt es beim Festziehen zu einem Formschluss. Das Scheibenpaar sitzt nun fest an seinem Platz und Bewegungen sind nur noch zwischen den Keilflächen möglich. Schon bei geringster Drehung in Löserichtung erfolgt aufgrund der Keilwirkung eine Erhöhung der Klemmkraft und die Schraube sichert sich somit selbst. Ein Montageelement für ein NordLock-Keilsicherungsscheibenpaar ist beispielsweise in der WO 02/31368 A1 beschrieben.

Die Schnorrscheibe ist eine federnde Scheibe zwischen Schraubenkopf und Werkstück, die an der Ober- und Unterseite verzahnt ist.

Die Teckentrup-Scheibe sichert kraftschlüssig und formschlüssig gegen Lockern und Losdrehen von Schraubverbindungen. Der Kraftschluß der Teckentrup-Scheibe wird durch Federkraft bewirkt. Den Formschluß erreicht die Teckentrup-Scheibe durch eine spezifische Oberflächenprägung.

Einige dieser Schraubensicherungen haben sich als unbrauchbar erwiesen, wie etwa die Teckentrup- und die Schnorr-Scheibe (siehe Vergleichsbeispiele). Die Teckentrup- und die Schnorr-Scheibe bieten keine Sicherungswirkung gegen Losdrehen unter Querlast. Das NordLock-Scheibenpaar hat den Nachteil, dass es unter dynamischer Belastung der Schraubverbindungen zu einem Verlust der Vorspannkraft durch Setzen und/oder Relaxation kommt, insbesondere bei hochfesten Schrauben der Festigkeitsklassen 10.9 und 12.9 (siehe Vergleichsbeispiele).

Die Sperrzahnschraube ist wie die Rippschraube ein kopfsperrendes System, für das kein separates Sicherungselement benötigt wird. Die Sperrzahnschraube zeigt zwar eine gute Sicherungswirkung, ist jedoch darin nachteilig, dass die Verzahnungen in die Gegenlagen, also die Oberflächen der Auflagewerkstoffe, eindringen und dass es damit zu einer relativ großen Verletzung der Oberflächen der Auflagewerkstoffe kommt. Auch die Rippen der NordLock-Scheiben dringen in die Gegenlagen ein.

Eine große Verletzung der Oberfläche der Auflagewerkstoffe wirkt sich auch sehr negativ für die Wiederverschraubbarkeit aus. Die Oberflächenrauigkeit wird stark verändert, was die Unterkopfreibung unkontrolliert erhöht und damit die Vorspannkraft verändert.

Auch die Rippschraube zeigt eine gute Sicherungswirkung (dazu siehe Vergleichsbeispiel 1).

Beim Einsatz von kopfsperrenden Sicherungsschrauben (Stahlschrauben) in Leichtmetall- bzw. Aluminiumkonstruktionen, welche Betriebstemperaturen von 110°C und mehr erfahren, werden die Stahlschrauben über die Streckgrenze hinaus belastet. Nach Rückkühlung auf Raumtemperatur treten erhöhte Vorspannkraftsetzverluste auf.

Ein weiterer Nachteil der kopfsperrenden Systeme ist, dass bei Mehrfachverwendung die kopfsperrenden Schrauben und Muttern in den Sperrbereichen geräumt werden müssen.

Weiterhin gibt es auch gewindesperrende Systeme wie beispielsweise Spira-Lock (Sperrgewinde mit einer speziellen Auslegung des Gewindeprofils). Nachteilig bei diesen Systemen ist, dass grifftrocken geschmierte Schrauben eingesetzt werden müssen, da die Reibwerte im ungeschmierten Zustand über µ ges = 0,25 liegen, während die VDI 2230 für die Berechnung einen Reibwert von µ ges = 0,12 vorsieht.

Eine weitere Möglichkeit für die Sicherung von Schrauben ist die Verklebung mittels eines Flüssigkunststoffs. Hierfür ist jedoch ein hoher Reinigungsgrad erforderlich, was zu einem erhöhten Aufwand führt.

In der DE 40 38 557 C2 ist eine Sicherungsscheibe für Schraubverbindungen beschrieben, die aus einer Papier-, Kunststoff- oder Metallfolie in einer Dicke von 0,1 bis 0,3 mm mit auf der Ober- und Unterseite aufgeklebten harten Partikeln besteht. Bei den harten Partikeln handelt es sich bevorzugt um oxidkeramische runde Partikel mit einer Größe von 50 bis 150 µm.

Eine Sicherungsscheibe gemäß DE 40 38 557 C2 hat sich in der Praxis nicht bewährt. Die hier verwendeten runden Partikel begünstigen das Gleiten der Trennflächen zueinander, was nachteilig im Hinblick auf die Sicherungswirkung ist. Die Verwendung von Partikeln einer Größe von 50 bis 150 µm führt zu einem Spalt, der die Ebenheit der Substrate und die Planizität der Kontaktflächen zueinander nachteilig beeinflussen kann. Aufgrund der geringen Scherfestigkeit des Klebers besteht zudem das Problem, dass die Partikel beim Verschraubungsvorgang und der dabei stattfindenden Relativbewegung zwischen Partikeln und Oberflächen nicht an ihrer ursprünglichen Position verbleiben, was eine unkontrollierte, inhomogene Belegung der Oberfläche mit Partikeln zur Folge hat. Neben der ungeeigneten sphärischen Partikelform führt dies insgesamt zu einer schlechten Sicherungswirkung.

EP 0 961 038 A1 (KEMPTEN ELEKTROSCHMELZ GMBH [DE], WACKER GMBH [DE]) beschreibt ein Verbindungselement zur reibungserhöhenden Verbindung von zu fügenden Werkstücken, welches aus einer dünnen federelastischen Folie besteht, wobei die Folie an ihrer Oberfläche Partikel definierter Größe trägt. Diese Partikel bestehen aus einem Material mit einer Druck- und Scherfestigkeit, welche größer als jene der zu fügenden Werkstücke sind.

EP 1 300 485 A1 (WACKER GMBH [DE]) beschreibt eine kräfteübertragende Oberflächenschicht, die mit reibungserhöhenden Partikeln in einer Matrix beschichtet ist. Diese Matrix umfasst eine obere und eine untere Schicht, wobei die untere Schicht eine für eine reibungserhöhende Fixierung übliche metallische Bindephase und die obere Schicht eine weitere metallische Bindephase mit einer vom Durchmesser der Partikel abhängigen Dicke ist.

### Aufgabe der Erfindung

Der Erfindung liegt daher die Aufgabe zugrunde, eine Schraubensicherung zur Verfügung zu stellen, die hinsichtlich der Sicherungswirkung den bekannten Schraubensicherungen des Standes der Technik mindestens gleichwertig oder aber überlegen ist, die aber die Nachteile des Standes der Technik vermeidet, insbesondere nicht zu einer relativ großen Eindringung der Schraubensicherung in die Oberfläche des Auflagewerkstoffs und somit nicht zu einer relativ großen Verletzung der Oberfläche des Auflagewerkstoffs führt, und welche für hochbelastete, dauerhafte, wieder lösbare und wieder verschraubbare Schraubverbindungen eingesetzt werden kann.

### Zusammenfassung der Erfindung

Die vorstehende Aufgabe wird erfindungsgemäß gelöst durch ein Sicherungselement für Schraubverbindungen gemäß Anspruch 1 sowie dessen Verwendung gemäß Anspruch 10. Vorteilhafte und besonders zweckmäßige Ausgestaltungen des Anmeldungsgegenstandes sind in den Unteransprüchen angegeben.

Gegenstand der Erfindung ist somit ein Sicherungselement für Schraubverbindungen als Zwischenlage zwischen Schraubenkopf und Auflagewerkstoff und/oder zwischen Mutter und Auflagewerkstoff, wobei der Grundkörper des Elements aus einem metallischen Werkstoff besteht, auf dessen Ober- und Unterseite Hartstoffpartikel fixiert sind, das dadurch gekennzeichnet ist, dass die Hartstoffpartikel mittels einer metallischen Bindephase fixiert sind, wobei die Dicke der metallischen Bindephase maximal etwa 60% des mittleren Durchmesser der Hartstoffpartikel beträgt, so dass die Hartstoffpartikel aus der metallischen Bindephase herausragen, und wobei die Hartstoffpartikel einen maximalen Durchmesser von 100 µm und eine mittlere Korngröße D₅₀ im Bereich von 8 - 35 µm aufweisen.

Gegenstand der Erfindung ist ebenso die Verwendung eines erfindungsgemäßen Sicherungselements für hochbelastete, dauerhafte und wieder lösbare Schraubverbindungen, wobei das Sicherungselement als Zwischenlage zwischen Schraubenkopf und Auflagewerkstoff und/oder zwischen Mutter und Auflagewerkstoff eingesetzt wird.

Ein wesentlicher Vorteil des erfindungsgemäßen Sicherungselements liegt darin, dass es bei der Verschraubung zu einer relativ geringen Eindringung in die Oberfläche der Auflagewerkstoffe und somit zu einer nur relativ geringen Verletzung der Oberfläche der Auflagewerkstoffe kommt.

Für herkömmliche Sicherungssysteme mit geriffelten Oberflächen in der Schraubenkopfunterseite wie der Sperrzahnschraube oder in Sicherungsscheiben wie dem NordLock-Scheibenpaar liegt die Verletzungstiefe im Bereich von etwa 100 bis 200 µm, während sie bei Einsatz des erfindungsgemäßen Sicherungselements, beispielsweise bei Verwendung einer Hartstoffkörnung mit einer mittleren Partikelgröße von 10 µm, nur ca. 4 - 6 µm entsprechend dem freien Kornüberstand beträgt.

Im Falle des Öffnens und Schließens einer erfindungsgemäß gesicherten Schraubverbindung werden die Gegenflächen nur wenig beschädigt, so dass vor dem erneuten Schließen der Verbindung die Gegenflächen nicht oder nur wenig geräumt und gereinigt oder mechanisch nachbearbeitet werden müssen.

Mit dem erfindungsgemäßen Sicherungselement ist daher eine Wiederverschraubung möglich, ohne dass aufwendige Reinigungs- und Bearbeitungsmaßnahmen erforderlich sind, d.h. die Schraubverbände müssen vor einer Wiederverschraubung nicht überarbeitet werden. Vorzugsweise wird für eine Wiederverschraubung Jedoch ein neues Sicherungselement eingesetzt. Das erfindungsgemäße Sicherungselement kann in allen Materialien einschließlich aller gehärteten Materialien eingesetzt werden, im Gegensatz zu einigen der handelsüblichen Sicherungssysteme wie den kopfsperrenden Systemen und dem NordLock-Scheibenpaar, die nur in ungehärteten Materialien einsetzbar sind. Auch in Leichtmetallkonstruktionen, beispielsweise in Aluminiumkonstruktionen, kann das erfindungsgemäße Sicherungselement eingesetzt werden.

Falls als erfindungsgemäßes Sicherungselement eine dünne beschichtete Folie in einer Stärke von 0,1 mm eingesetzt wird, ergibt sich hier der zusätzliche Vorteil einer erheblichen Gewichtsersparnis gegenüber Standard-Sicherungselementen, die beispielsweise bei einer Standard M6-Verschraubung mit einer Standard-Sicherungsscheibe von 1,6 mm Stärke bereits ca. 94% beträgt, sowie weiterhin der Vorteil eines geringeren Bauraums.

### Detaillierte Beschreibung der Erfindung

Der Grundkörper des erfindungsgemäßen Sicherungselements besteht aus einem metallischen Werkstoff, vorzugsweise Stahl und weiter vorzugsweise Federstahl. Es kann ein handelsüblicher unlegierter Federbandstahl eingesetzt werden. Solche feder- bzw. biegungselastischen Stähle besitzen vorzugsweise eine Zugfestigkeit im Bereich von 350-1850 N/mm², noch weiter bevorzugt von 800-1600 N/mm². Es können aber auch andere, insbesondere auch weichere Stähle eingesetzt werden. Anwendungsbezogen werden säure- und/oder temperaturbeständige Stähle verwendet.

Die Dicke des Sicherungselements ist sowohl von der Anwendung als auch von der Schraubengröße abhängig und beträgt vorzugsweise ≤ 2 mm, weiter vorzugsweise ≤ 0,2 mm, und insbesondere bevorzugt 0,1 - 0,2 mm. Dünne Folien einer Stärke von 0,1 bis 0,2 mm werden vorzugsweise dann eingesetzt, wenn Gewichtsersparnis und beschränkter Bauraum oder Packungsdichte eine Rolle spielen. Dickere Elemente werden beispielsweise eingesetzt bei größeren Verschraubungen und Mehrfachverschraubungen bzw. Flanschen, bei denen keine Einzelelemente eingesetzt werden sollten. Die Dicke der Elemente kann nach DIN 125 abhängig vom Schraubendurchmesser gewählt werden.

Die Elemente können durch Stanzen, Lasern oder Erodieren hergestellt werden.

Als Hartstoffe werden vorzugweise Materialien eingesetzt, die unter den jeweiligen Einsatzbedingungen weder mit den Werkstoffen der Schraubenverbindungen noch mit Umgebungsmedien chemisch reagieren. Bevorzugte Beispiele für Hartstoffe sind Carbide wie SiC, WC und B₄C, Nitride wie Si₃N₄ und kubisches BN, Boride oder SiO₂ oder Al₂O₃ oder Diamant. Insbesondere bevorzugt werden Diamant, B₄C oder SiC eingesetzt.

Die Größe der harten Partikel ist so zu wählen, dass die Beschädigung der Auflagewerkstoffe durch das Eindrücken der Partikel kein unzulässiges Ausmaß erreicht. Eine Partikelgröße mit einem maximalen Durchmesser von 0,1 mm erfüllt im allgemeinen diese Forderung.

Besonders bevorzugt werden harte Partikel mit einem maximalen Durchmesser von 35 µm eingesetzt. Die harten partikel weisen eine mittlere Korngröße D₅₀ im Bereich von 8 bis 35 µm, vorzugsweise von 10 bis 25 µm, auf. Die Bestimmung der Korngröße erfolgt in bekannter Weise mittels Laserbeugung, beispielsweise mit einem Gerät der Firma CILAS (CILAS 1064), an Feststoffdispersionen.

In Fällen, bei denen bestehende Korrosionsschutzschichten durchdrungen werden müssen, kann es sinnvoll sein, harte Partikel einer mittleren Größe von mehr als 30 µm einzusetzen. Typische Korrosionsschutzmaßnahmen sind Phosphatierungen und KTL-Lacke. Phosphatierungen haben üblicherweise Schichtdicken bis 15 µm, KTL- Lacke bis 25 µm. Für Phosphatierungen kann daher die Verwendung harter Partikel mit einem mittleren Durchmesser von 35 µm sinnvoll sein.

Die Zahl der harten Partikel pro Flächeneinheit der Kontaktflächen der Auflagewerkstoffe ist vorzugsweise so zu wählen, dass beim Anziehen der Schrauben ein Eindrücken der Partikel in die Gegenfläche gewährleistet ist. Dazu sollten wenigstens 5 % der Kontaktfläche des Sicherungselements mit harten Partikeln belegt sein, eine Belegung größer 30 % bringt keine weiteren Vorteile mehr.

Die erfindungsgemäßen Sicherungselemente in Form von Lochelementen werden mit einer metallischen Schicht mit eingelagerten Hartstoffpartikeln beschichtet. Vorzugsweise erfolgt die Beschichtung mittels galvanotechnischer Verfahren. Die Beschichtung erfolgt vorzugsweise nach der Herstellung der Lochelemente, es ist aber auch möglich, eine Bandbeschichtung durchzuführen und danach die Einzelelemente vom Band zu trennen, beispielsweise durch Stanzen oder Lasern.

Die metallische Schicht dient als Bindephase für die Hartstoffpartikel. Insbesondere bevorzugt können die Beschichtungen mittels einer außenstromlosen (= chemischen) Vernickelung hergestellt werden. Die aufgebrachten Chemisch-Nickel-Schichten können durch eine Wärmebehandlung bis ca. 400°C ausgehärtet werden, wodurch die Haftung auf dem Elementmaterial verbessert und die Eigenfestigkeit der Schicht erhöht wird.

In einer bevorzugten Ausführungsform ist die Festigkeit der metallischen Bindephase mindestens ebenso hoch wie die Festigkeit des Auflage- und Schraubenwerkstoffs. Es ist aber auch möglich, dass die Festigkeit der Bindephase geringer ist als die Festigkeit des Auflage- und Schraubenwerkstoffs.

Die Dicke der metallischen Bindephase sollte geringer sein als die mittlere Partikelgröße der harten Partikel, damit diese aus der Beschichtung herausragen und in die Oberfläche der Auflagewerkstoffe eingreifen können. Die Dicke der metallischen Bindephase beträgt maximal etwa 60% des mittleren Durchmessers der Hartstoffpartikel. Die Schichtdicke ist somit in Abhängigkeit von der Partikelgröße der harten Partikel zu wählen. Beispielsweise sollte die Schichtdicke bei einer mittleren Korngröße der harten Partikel von 10 µm ca. 6 µm betragen.

Die beschichteten Sicherungselemente sind beständig gegen Säuren und Laugen sowie temperaturbeständig. Bei Verwendung von Diamant als Hartstoffpartikel sind Temperaturanwendungen bis etwa 500°C, bei Carbiden auch bis zu höheren Temperaturen von ca. 800°C möglich.

Das erfindungsgemäße Sicherungselement kann als Einloch- oder Mehrloch-Sicherungselement ausgebildet sein. In der einfachsten und bevorzugten Ausführungsform handelt es sich bei dem erfindungsgemäßen Sicherungselement um eine Sicherungsscheibe, insbesondere eine Einloch- oder Mehrlochscheibe. Das Sicherungselement kann jedoch auch beliebige regelmäßige oder unregelmäßige Außenkonturen aufweisen, beispielsweise um sich den Konturen des Auflagewerkstoffs der Schraubverbindungen anzupassen. Dies gilt sowohl für Einfach- als auch Mehrfachsicherungselemente.

Das erfindungsgemäße Sicherungselement kann insbesondere für hochbelastete, dauerhafte Verschraubungen eingesetzt werden, die wieder lösbar und wieder verschraubbar sein müssen. Sie kann für Verschraubungen eingesetzt werden, die ohne aufwendiges Reinigen oder Räumen der Verschraubungsflächen wieder nutzbar sein müssen.

Üblicherweise wird ein Sicherungselement pro Schraubverbindung eingesetzt, das unter den Schraubenkopf und/oder die Mutter gelegt und verschraubt wird. Es ist jedoch auch möglich, bei Mehrfachverschraubungen, bei denen eine Verbindung durch mehrere Schraubverbindungen nebeneinander hergestellt wird, anstelle von einzelnen Sicherungselementen für jede einzelne der Schraubverbindungen ein einziges Sicherungselement einzusetzen für alle Schrauben gemeinsam. Dieses Sicherungselement kann beispielsweise eine kreisförmige Scheibe sein, in der mehrere kreisförmige Durchbrüche vorhanden sind für die einzelnen Schrauben, aber auch andere Außenkonturen sind möglich. Eine solche Mehrfachsicherungsscheibe bietet Vorteile für die Montage einer solchen Verbindung, da dann nicht einzelne Sicherungsscheiben einzeln aufgelegt und verschraubt werden müssen.

### Beispiele und Vergleichsbeispiele

Die nachfolgenden Beispiele und Vergleichsbeispiele dienen zur weiteren Erläuterung der Erfindung.

### Beispiel 1

### Herstellung eines erfindungsgemäßen Sicherungselements

### Lochscheibe Dₐ = 20 mm Dᵢ = 10,3 mm h = 2 mm

Zur Herstellung eines erfindungsgemäßen Sicherungselements werden zunächst ringförmige Scheiben in den Abmessungen d20/10.3 * 2.0 mm aus unbeschichtetem 2.0 mm dickem Stahlblech C 75 S +QT gestanzt. Dieses Blech weist eine Festigkeit von 1412 - 1449 N/mm² auf.

Die vorgefertigten Scheiben werden auf geeignete Halterungen gesteckt und nach den allgemeinen Regeln der Galvanotechnik durch Entfetten, Beizen und Aktivieren vorbehandelt.

Sodann wird der Warenträger mit den Scheiben in ein Chemisch Nickel Bad getaucht, in dem Diamantpulver mit 20 µm mittlerem Partikeldurchmesser dispergiert ist. Die Menge des dispergierten Diamantpulvers wird so gewählt, dass bei den im Beschichtungsbad herrschenden Bedingungen (Badbewegung; Abscheidegeschwindigkeit) die gewünschte Flächenbelegung mit Diamantpartikel erreicht wird. Im vorliegenden Fall wurde eine Flächenbelegung von 19.5 ±1.5 % ermittelt. Die Dicke der abgeschiedenen Metallschicht wurde mit 10 µm so eingestellt, dass der freie Kornüberstand etwa 50 % des Korndurchmessers entspricht. Um einen sehr gleichmäßigen Kornüberstand zu erreichen, ist es vorteilhaft, die Diamantpartikel in einem ersten Beschichtungsschritt auf der Scheibenoberfläche zu fixieren, wobei die Schichtdicke < 3 µm beträgt. In einem zweiten Beschichtungsschritt wird die endgültige Schichtdicke in einem feststofffreiem Nickelbad eingestellt. Bei üblichen Verfahrensbedingungen beträgt die Gesamttauchzeit in den Beschichtungsbädern etwa 30 Minuten.

Der Warenträger mit den nunmehr beschichteten Scheiben wird aus dem Beschichtungsbad entnommen und in einem Ultraschallbad gereinigt, um nur lose anhaftende Diamantpartikel zu entfernen.

Die gereinigten Scheiben werden vom Warenträger abgenommen und einer Wärmebehandlung von 2 Stunden bei 350 °C unterzogen. Diese Behandlung verbessert die Haftung der Chemisch-Nickel-Schicht auf der Stahlfolie sowie den Sitz der Partikel in der Schicht selbst. In Abhängigkeit vom Substrat kann auch eine Wärmebehandlung bei reduzierten Temperaturen vorteilhaft sein.

### Beispiel 2 und Vergleichsbeispiele 1 bis 4

Zur Untersuchung der Sicherungswirkung wurde auf einem Rüttelprüfstand der Bauart Junker ein Vibrationsversuch nach DIN 65151 mit 12,5 Hz dynamisch wechselnder Querkraftbelastung durchgeführt. Der Vorspannkraftverlauf wurde als Funktion der Lastwechsel (Zeit) gemessen und registriert. Es wurden jeweils 1000 Lastwechsel durchgeführt. Für die Versuche wurden schwarze M10-Schrauben nach DIN EN ISO 4017 eingesetzt der Festigkeitsklasse 10.9 nach ISO 898-1. Die Klemmlänge betrug 1,5 mm. Die Schrauben wurden zügig und gleichmäßig mit Drehmomentschlüssel angezogen. Die Vorspannkraft betrug 40 kN.

Die Beurteilung der Sicherungswirkung erfolgt an Hand des Vorspannkraftabfalls über die Versuchszeit. Beträgt die Vorspannkraft am Ende des Versuchs noch 80% der ursprünglichen Vorspannkraft und mehr, so ist die Sicherungswirkung einer Losdrehsicherung gegeben. Liegt die Vorspannkraft am Ende des Versuchs unterhalb 80%, beträgt aber immer noch wenigstens 20%, so ist noch die Wirkung einer Verliersicherung gegeben. Liegt die Vorspannkraft am Ende des Versuchs unterhalb von 20%, ist das Sicherungselement unbrauchbar.

Als Auflagewerkstoff für die Versuche wurden eingesetzt: ein Baustahl mittlerer Härte (Härte 163 HV5, Werkstoffbezeichnung S355J2G3 bzw. St 52-3), ein Gußwerkstoff (EN-GJL-250), ein Einsatzstahl (Härte 210 HV5, Werkstoffbezeichnung 16MnCr5) und ein Aluminiumwerkstoff (AlMgSi1). Die Oberflächenrauheit der Auflagewerkstoffe betrug Rₐ = 1 µm, für die Auflagewerkstoffe S355J2G3 und EN-GJL-250 wurden zusätzlich Versuche mit Rₐ = 2,5 µm durchgeführt.

Als Sicherungselemente für die Versuche wurden eine erfindungsgemäße Sicherungsscheibe gemäß Beispiel 1 eingesetzt sowie weitere handelsübliche Schraubensicherungen (Sicherungsscheiben NordLock, Teckentrup und Schnorr sowie die Rippschraube mit der Profilierung auf der Unterseite des Schraubenkopfs).

Das Ergebnis der Versuche nach 1000 Lastwechseln ist in den Tabellen 1 und 2 dargestellt.

In Tabelle 1 ist für die durchgeführten Versuche dargestellt, wie hoch die Vorspannkraft nach 1000 Lastwechseln war, bezogen auf die Vorspannkraft zu Beginn der Versuche. Dieser Wert sollte bei mindestens 80% liegen, damit eine gute Losdrehsicherungswirkung gegeben ist. Bei den Versuchen mit der Schnorr-Scheibe und der Teckentrup-Scheibe war die Vorspannkraft bereits nach weniger als 1000 Lastwechseln auf Null abgesunken, in der Tabelle ist in diesen Fällen jeweils in eckigen Klammern angegeben, nach wieviel Lastwechseln die Vorspannkraft auf Null abgesunken war.

In Tabelle 2 ist die Bewertung der durchgeführten Versuche im Hinblick auf die Sicherungswirkung dargestellt.

Aus Tabelle 2 geht hervor, dass das erfindungsgemäße Sicherungselement und die handelsübliche Rippschraube die Voraussetzungen für die Sicherungswirkung einer Losdrehsicherung sehr gut erfüllen. Demgegenüber ist die "NordLock"-Sicherung bereits etwas schlechter, da die Vorspannkraft bei den geprüften Auflagewerkstoffen während des Versuchs deutlicher abfällt. Die Schnorr-Scheibe und die Teckentrup-Scheibe erwiesen sich beide als unbrauchbar. Der Abfall der Vorspannkraft fällt bei den Versuchen mit der erfindungsgemäßen Sicherungsscheibe gemäß Beispiel 1 teilweise geringer aus als bei den Versuchen mit der Rippschraube.

Nach den Versuchen wurde die Verletzungstiefe des Aluminium-Auflagewerkstoffs mittels konfokaler Laserscanning-Mikroskopie vermessen. Die mittlere punktuelle Verletzungstiefe beträgt für die mit Beispiel 1 durchgeführten Versuche 10 µm, bei Vergleichsbeispiel 1 (Rippschraube) sind es flächig 140 µm.

**Tabelle 1: Vorspannkraft nach 1000 Lastwechseln, bezogen auf Vorspannkraft zu Beginn der Versuche**

| | S355J2G3 (St 52-3) | | EN-GJL-250 | | 16MnCr5 | AlMgSi1 |
|---|---|---|---|---|---|---|
| | Rₐ = 1 | Rₐ = 2,5 | Rₐ = 1 | Rₐ = 2,5 | Rₐ = 1 | Rₐ = 1 |
| Beispiel 1 | 88% | 86% | 93% | 91% | 87% | 90% |
| Vergleichsbeispiel 1 (Rippschraube) | 87% | 88% | 87% | 87% | 87% | 88% |
| Vergleichsbeispiel 2 (Nord-Lock) | 77% | 78% | 81% | 81% | 79% | 76% |
| Vergleichsbeispiel 3 (Schnorr-Scheibe) | 0% [250] | 0% [300] | 0% [300] | 0% [300] | 0% [300] | 0% [220] |
| Vergleichsbeispiel 4 (Teckentrup) | 0% [600] | 0% [380] | 0% [400] | 0% [350] | 0% [400] | 0% [400] |

**Tabelle 2: Sicherungswirkung der verschiedenen Schraubensicherungen für verschiedene Auflagewerkstoffe**

| | S355J2G3 (St 52-3) | EN-GJL-250 | 16MnCr5 | AlMgSi1 |
|---|---|---|---|---|
| Beispiel 1 | Sehr gut Losdrehsicherung | Sehr gut Losdrehsicherung | Sehr gut Losdrehsicherung | Sehr gut Losdrehsicherung |
| Vergleichsbeispiel 1 (Rippschraube) | Sehr gut Losdrehsicherung | Sehr gut Losdrehsicherung | Sehr gut Losdrehsicherung | Sehr gut Losdrehsicherung |
| Vergleichsbeispiel 2 (Nord-Lock) | Befriedigend (Verliersicherung an der Grenze zur Losdrehsicherung) | Gut (Losdrehsicherung, aber Vorspannkraft geringer als oben) | Befriedigend (Verliersicherung an der Grenze zur Losdrehsicherung) | Befriedigend (Verliersicherung an der Grenze zur Losdrehsicherung) |
| Vergleichsbeispiel 3 (Schnorr-Scheibe) | unbrauchbar | unbrauchbar | unbrauchbar | unbrauchbar |
| Vergleichsbeispiel 4 (Teckentrup) | unbrauchbar | unbrauchbar | unbrauchbar | unbrauchbar |

## Patentansprüche

1. Sicherungselement für Schraubverbindungen als Zwischenlage zwischen Schraubenkopf und Auflagewerkstoff und/oder zwischen Mutter und Auflagewerkstoff, wobei der Grundkörper des Elements aus einem metallischen Werkstoff besteht, auf dessen Ober- und Unterseite Hartstoffpartikel fixiert sind, **dadurch gekennzeichnet, dass** die Hartstoffpartikel mittels einer metallischen Bindephase fixiert sind, wobei die Dicke der metallischen Bindephase maximal etwa 60% des mittleren Durchmessers der Harstoffpartikel beträgt, so dass die Hartstoffpartikel aus der metallischen Bindephase herausragen, und wobei die Hartstoffpartikel einen maximalen Durchmesser von 100 µm und eine mittlere Korngröße D₅₀ im Bereich von 8 bis 35 µm aufweisen.

2. Sicherungselement nach Anspruch 1, **dadurch gekennzeichnet, dass** der metallische Werkstoff des Sicherungselements Stahl, vorzugsweise Federstahl, weiter vorzugsweise Federstahl mit einer Zugfestigkeit von 350-1850 N/mm², ist.

3. Sicherungselement nach Anspruch 1 und/oder 2, **dadurch gekennzeichnet, dass** das Sicherungselement eine Dicke von ≤ 2 mm, vorzugsweise ≤ 0,2 mm, weiter vorzugsweise 0,1 - 0,2 mm, aufweist.

4. Sicherungselement nach mindestens einem der vorangehenden Ansprüche, **dadurch gekennzeichnet, dass** die Hartstoffpartikel aus der Gruppe gewählt sind, bestehend aus Carbiden, Nitriden, Boriden, Diamant, SiO₂ und Al₂O₃, vorzugsweise aus der Gruppe, bestehend aus Diamant, Siliciumcarbid und Borcarbid.

5. Sicherungselement nach mindestens einem der vorangehenden Ansprüche, **dadurch gekennzeichnet, dass** die Hartstoffpartikel einen maximalen Durchmesser von 35 µm, und eine mittlere Korngröße D₅₀ im Bereich von 10 bis 25 µm, aufweisen.

6. Sicherungselement nach mindestens einem der vorangehenden Ansprüche, **dadurch gekennzeichnet, dass** 5 bis 30% der Kontaktfläche des Sicherungselements mit Hartstoffpartikeln belegt sind.

7. Sicherungselement nach mindestens einem der vorangehenden Ansprüche, **dadurch gekennzeichnet, dass** die metallische Bindephase eine galvanotechnisch erzeugte Chemisch-Nickel-Schicht ist.

8. Sicherungselement nach mindestens einem der vorangehenden Ansprüche, **dadurch gekennzeichnet, dass** es sich um ein Einloch-Sicherungselement, vorzugsweise um eine Einlochscheibe handelt.

9. Sicherungselement nach mindestens einem der Ansprüche 1-7, **dadurch gekennzeichnet, dass** es sich um ein Mehrloch-Sicherungselement, vorzugsweise um eine Mehrlochscheibe handelt.

10. Verwendung eines Sicherungselements gemäß mindestens einem der Ansprüche 1 bis 9 für hochbelastete, dauerhafte und wieder lösbare Schraubverbindungen, wobei das Sicherungselement als Zwischenlage zwischen Schraubenkopf und Auflagewerkstoff und/oder zwischen Mutter und Auflagewerkstoff eingesetzt wird.

## Claims

1. A securing element for screw connections as an interlayer between the screw head and supporting material and/or between the nut and supporting material, the basic body of the element consisting of a metallic material, to the top side and underside of which hard material particles are fixed, **characterized in that** the hard material particles are fixed by means of a metallic binding phase, the thickness of the metallic binding phase amounts to a maximum of about 60% of the mean diameter of the hard material particles, so that the hard material particles project out of the metallic binding phase, and wherein the hard material particles have a maximum diameter of 100 µm and a mean grain size D₅₀ in the range of from 8 to 35 µm.

2. The securing element as claimed in claim 1, **characterized in that** the metallic material of the securing element is steel, preferably spring steel, further preferably spring steel with a tensile strength of 350-1850 N/mm².

3. The securing element as claimed in claim 1 and/or 2, **characterized in that** the securing element has a thickness of ≤ 2 mm, preferably ≤ 0.2 mm, further preferably 0.1-0.2 mm.

4. The securing element as claimed in at least one of the preceding claims, **characterized in that** the hard material particles are selected from the group consisting of carbides, nitrides, borides, diamond, SiO₂ and Al₂O₃, preferably from the group consisting of diamond, silicon carbide and boron carbide.

5. The securing element as claimed in at least one of the preceding claims, **characterized in that** the hard material particles have a maximum diameter of 35 µm, and a mean grain size D₅₀ in the range of 10 to 25 µm.

6. The securing element as claimed in at least one of the preceding claims, **characterized in that** 5 to 30% of the contact surface of the securing element is covered with hard material particles.

7. The securing element as claimed in at least one of the preceding claims, **characterized in that** the metallic binding phase is a chemical nickel layer generated by electroplating.

8. The securing element as claimed in at least one of the preceding claims, **characterized in that** it is a single-hole securing element, preferably a single-hole washer.

9. The securing element as claimed in at least one of claims 1-7, **characterized in that** it is a multiple-hole securing element, preferably a multiple-hole washer.

10. The use of a securing element as claimed in at least one of claims 1 to 9 for highly loaded, permanent and rereleasable screw connections, the securing element being used as an interlayer between the screw head and supporting material and/or between the nut and supporting material.

## Revendications

1. Elément d'arrêt pour assemblages vissés en tant que couche intermédiaire entre la tête de vis et la matière d'appui et/ou entre l'écrou et la matière d'appui, le corps de base de l'élément étant constitué d'une matière métallique sur la face supérieure et inférieure de laquelle sont fixées des particules de matière dure, **caractérisé en ce que** les particules de matière dure sont fixées au moyen d'une phase liante métallique, l'épaisseur de la phase liante métallique correspondant au maximum à environ 60 % du diamètre moyen des particules de matière dure, de sorte que les particules de matière dure saillissent hors de la phase liante métallique et les particules de matière dure présentant un diamètre maximal de 100 µm et une grosseur de grains moyenne D₅₀ de l'ordre de 8 à 35 µm.

2. Elément d'arrêt selon la revendication 1, **caractérisé en ce que** la matière métallique de l'élément d'arrêt est de l'acier, de préférence de l'acier à ressorts, de manière plus préférée de l'acier à ressort d'une résistance à la traction de 350 à 1850 N / mm².

3. Elément d'arrêt selon la revendication 1 et/ou 2, **caractérisé en ce que** l'élément d'arrêt présente une épaisseur de ≤ 2 mm, de préférence ≤ 0,2 mm, de manière plus préférée de 0,1 à 0,2 mm.

4. Elément de blocage selon au moins l'une quelconque des revendications précédentes, **caractérisé en ce que** les particules de matière dure sont choisies dans le groupe composé des carbures, des nitrures, des borures, du diamant, du SiO₂ et de l'Al₂O₃, de préférence dans le groupe composé du diamant, du carbure de silicium et du carbure de bore.

5. Elément de blocage selon au moins l'une quelconque des revendications précédentes, **caractérisé en ce que** les particules de matière dure présentent un diamètre maximum de 35 µm et une grosseur de grains moyenne D₅₀ de l'ordre de 10 à 25 µm.

6. Elément de blocage selon au moins l'une quelconque des revendications précédentes, **caractérisé en ce que** de 5 à 30 % de la surface de contact de l'élément de blocage sont occupés par des particules de matière dure.

7. Elément de blocage selon au moins l'une quelconque des revendications précédentes, **caractérisé en ce que** la phase liante métallique est une couche de nickel chimique créée par galvanotechnique.

8. Elément de blocage selon au moins l'une quelconque des revendications précédentes, **caractérisé en ce qu'**il s'agit d'un élément de blocage à un trou, de préférence d'une rondelle à un trou.

9. Elément de blocage selon au moins l'une quelconque des revendications 1 à 7, **caractérisé en ce qu'**il s'agit d'un élément de blocage à plusieurs trous, de préférence d'une rondelle à plusieurs trous.

10. Utilisation d'un élément de blocage selon au moins l'une quelconque des revendications 1 à 9, pour des assemblages vissés fortement chargés, durables et redémontables, l'élément de blocage étant utilisé en tant que couche intermédiaire entre la tête de vis et la matière d'appui et/ou entre l'écrou et la matière d'appui.
